# EUROPEAN PATENT SPECIFICATION

(11) **EP 3 571 935 B1**
(45) Date of publication and mention of the grant of the patent: **20.11.2024**
(21) Application number: 18741726.6
(22) Date of filing: 16.01.2018
(51) Int. Cl.: A23L 15/00, A23J 1/09, A23J 3/04

(54) **DRIED EGG-WHITE PRODUCTION METHOD AND DRIED EGG-WHITE**
TROCKENEIKLARHERSTELLUNGSVERFAHREN UND TROCKENEIKLAR
PROCÉDÉ DE PRODUCTION DE BLANC D'OEUF SÉCHÉ ET BLANC D'OEUF SÉCHÉ

(30) Priority: 18.01.2017 JP 2017006780
(43) Date of publication of application: 27.11.2019
(73) Proprietor: Kewpie Corporation, Tokyo 150-0002 (JP)
(72) Inventor: EZAKI, Tomohiro, Chofu-shi Tokyo 182-0002 (JP); KODAMA, Risa, Chofu-shi Tokyo 182-0002 (JP); SASAGAWA, Nobuyuki, Chofu-shi Tokyo 182-0002 (JP); HANDA, Akihiro, Chofu-shi Tokyo 182-0002 (JP)
(74) Representative: J A Kemp LLP
(86) International application number: PCT/JP2018/001047
(87) International publication number: WO 2018/135497

(56) References cited:
- JP-A- 2001 095 473
- JP-A- 2008 086 306
- JP-A- 2014 103 957
- JP-A- H0 984 556
- JP-A- H09 205 984
- JP-A- S6 471 456
- JP-A- S61 152 264
- MINE Y ED - SCHIEBER ANDREAS ET AL: "Effect of pH during the dry heating on the gelling properties of egg white proteins", FOOD RESEARCH INTERNATIONAL, ELSEVIER, AMSTERDAM, NL, vol. 29, no. 2, 1 January 1996 (1996-01-01), pages 155 - 161, XP002496559, ISSN: 0963-9969, DOI: 10.1016/0963-9969(96)00008-7
- HIIDENHOVI JAAKKO ET AL: "Characterization of crude ovomucins obtained from various egg white layers", EUROPEAN FOOD RESEARCH AND TECHNOLOGY, SPRINGER BERLIN HEIDELBERG, BERLIN/HEIDELBERG, vol. 242, no. 2, 4 September 2015 (2015-09-04), pages 233 - 246, XP035606601, ISSN: 1438-2377, [retrieved on 20150904], DOI: 10.1007/S00217-015-2535-6
- NICIFOROVIC A ET AL: "Detection of irradiated food by the changes in protein molecular mass distribution", RADIATION PHYSICS AND CHEMISTRY, ELSEVIER, AMSTERDAM, NL, vol. 55, no. 5-6, 1 August 1999 (1999-08-01), pages 731 - 735, XP004172429, ISSN: 0969-806X, DOI: 10.1016/S0969-806X(99)00221-2
- HANDA, AKIHIRO: "Functional modification due to aggregation of egg white proteins", SEIBUTSU-KOGAKU KAISHI = JOURNAL OF THE SOCIETY FOR BIOSCIENCE AND BIOENGINEERING, vol. 93, 2015, pages 277 - 281, XP009515437
- KATO, AKIO ET AL.: "Structural and Gelling Properties of Dry-Heating Egg White Proteins", J. AGRIC . FOODCHEM., vol. 38, 1990, pages 32 - 37, XP055506727

## Description

### Technical Field

The present invention provides a method of producing dried egg white capable of easily and stably obtaining dried egg white having high gel strength, and the dried egg white.

### Background Art

In the past, dried egg white has been obtained by drying egg white liquid by various method such as spray drying and freeze drying, and widely used as a raw material of various foods.

For example, since dried egg white has a property of gelling when being dissolved in water and heated, it has been used as a gel reinforcement for meat processed products such as ham and sausage and fish paste products such as kamaboko (boiled fish paste).

As the gel strength of dried egg white increases, the effect as a gel reinforcement tends to increase.

Therefore, it has been proposed to provide dried egg white having high gel strength by humidify and continuously heating dried egg white as disclosed in Japanese Patent Application Laid-open No. 1997-205984, or by adding vitamin C to egg white liquid, mixing them, and continuously heating this mixture after drying as disclosed in Japanese Patent Application Laid-open No. 1986-152264.

Incidentally, in the meat processed product industry and paste products industry, in order to improve the product quality and reduce the cost, as dried egg white used as a raw material, dried egg white having gel strength higher than 600 g and constant quality (such as the gel strength), to which additives and the like are not added, is desired. However, such dried egg white has not been developed yet.

In Japanese Patent Application Laid-open No. 1997-205984 and Japanese Patent Application Laid-open No. 1986-152264, respectively, a method of humidifying and continuously heating dried egg white and a method of adding vitamin C to egg white liquid, mixing them, and continuously heating this mixture after drying to provide dried egg white having high gel strength are disclosed.

However, although the gel strength of the dried egg white obtained by the above-mentioned existing method is surely enhanced, the gel strength is 400 to 600 g at most or it is necessary to perform, for example, treatment with an additive. It has been difficult to obtain dried egg white having the gel strength of not less than 600 g without performing treatment with an additive.

Further, the gel strength of commonly distributed dried egg white is mostly 400 to 600 g, but the quality such as the gel strength is largely varied even among the same products.

Further, it has been known that by increasing the content of soluble aggregates of egg white proteins in the dried egg white by continuously heating them for a certain time at a certain temperature, dried egg white having high gel strength can be made. However, in the case of simply increasing the temperature and time of continuously heating the dried egg white, the egg white is over-denatured and the soluble aggregates become insoluble. For that reason, it has been difficult to obtain dried egg white having sufficiently improved gel strength.

The present invention has been made to satisfy such a demand, and according to the present invention, it is possible to produce dried egg white of a certain amount or more of the molecular weight in a specific range, which does not become insoluble, by performing continuous heating treatment a plurality of times or performing additional continuous heating treatment on dried egg white without using a special additive or the like for the dried egg white, thereby easily and stably obtaining dried egg white having high gel strength.

### Citation List

### Patent Literature

Patent Literature 1: Patent Literature 1: Japanese Patent Application Laid-open No. 1997-205984
Patent Literature 2: Japanese Patent Application Laid-open No. 1986-152264

### Disclosure of Invention

### Technical Problem

In view of the above, it is an object of the present invention to provide a method of producing dried egg white capable of easily and stably obtaining dried egg white having high gel strength, and the dried egg white.

### Solution to Problem

In order to achieve the above-mentioned object, as a result of intensive research, the present inventors have found that a method of producing dried egg white capable of easily and stably obtaining dried egg white having high gel strength by performing specific continuous heating so that a specific amount or more of dried egg white of a specific molecular weight is contained, and the dried egg white can be achieved, and completed the present invention.

That is, the present invention is described in claims 1 to 10.

### Advantageous Effects of Invention

According to the present invention, since a method of producing dried egg white capable of easily and stably obtaining dried egg white having high gel strength, and the dried egg white can be provided, a demand for dried egg white is expected to be further expanded.

### Mode(s) for Carrying Out the Invention

Hereinafter, the present invention will be described in detail.

### <Characteristics of Present Invention>

The present invention is characterized in that dried egg white contains a specific amount or more of dried egg white of a specific molecular weight. Accordingly, it is possible to easily and stably obtain dried egg white having high gel strength.

### <Dried Egg White of Present Invention>

The dried egg white of the present invention is not particularly limited as long as the proportion of an egg white protein having a molecular weight of not less than 97,400 and not more than 340,000 in egg white obtained by drying liquid egg white by various methods such as spray drying, pan drying, freeze drying, and vacuum drying is not less than 35% and not more than 80% of the proportion of an egg white protein having a molecular weight of not less than 20,100 and not more than 340,000. However, the proportion is favorably not less than 40%, more favorably not less than 45%, and particularly favorably not less than 50%, because dried egg white having high gel strength can be obtained.

In the case where the proportion of the egg white protein having a molecular weight of not less than 97,400 and not more than 340,000 in the dried egg white of the present invention to the egg white protein having a molecular weight of not less than 20,100 and not more than 340,000 is lower than the above-mentioned range, it is difficult to obtain dried egg white having high gel strength. Further, the upper limit of the proportion of the egg white protein having a molecular weight of not less than 97,400 and not more than 340,000 to the egg white protein having a molecular weight of not less than 20,100 and not more than 340,000 is not particularly limited. However, the proportion is favorably not more than 70%, and particularly favorably not more than 60%, because the effect depending on the molecular weight of dried egg is hardly to be expected and it is not economical.

### <Desalted Dried Egg White>

The dried egg white of the present invention can be desalted dried egg white by performing desalting treatment.

The method of the desalting treatment is not particularly limited, and conventional methods such as an electrodialysis method, an ultrafiltration method, a reverse osmosis method, a method of using ion exchange resin, and a dialysis method using a semi-permeable membrane such as a cellulose membrane can be used. However, it is favorable to use an ultrafiltration method or a reverse osmosis method, because dried egg white having high gel strength can be easily and stably obtained. Particularly favorably, an ultrafiltration method may be used.

### <Gel Strength of Dried Egg White>

In the present invention, the gel strength of dried egg white represents a value of the breaking stress of coagulated egg white, which is obtained by the measuring method to be described later. The gel strength of the dried egg white of the present invention is favorably not less than 625 g, more favorably not less than 650 g, more favorably not less than 700 g, more favorably not less than 725 g, more favorably not less than 750 g, and particularly favorably not less than 800 g, because strong gel can be obtained.

### <Method of Measuring Gel Strength>

One part of dried egg white is dissolved in 7 parts of saline of 2% by mass, this is filled and sealed in a casing formed of polyethylene having a folding diameter of 60 mm, and coagulated by heating in hot water of 80°C for 40 minutes, the obtained coagulated egg white is cut into a cylindrical shape with a height of 3 cm after cooling, and then, the breaking stress (the gel strength) on the cut surface is measured at a product temperature of 20°C by a texture analyzer (spherical plunger with a diameter of 8 mm, plunger lowering speed of 1 mm/sec).

Hereinafter, a production method of the present invention will be described.

### <Continuously Heated Raw Material Dried Egg White>

The continuously heated raw material dried egg white used for the dried egg white of the present invention is not particularly limited, and commercially available dried egg white may be used as long as it is continuously heated dried egg white in which the proportion of the egg white protein having a molecular weight of not less than 97,400 and not more than 340,000 is less than 35% of the proportion of the egg white protein having a molecular weight of not less than 20,100 and not more than 340,000. However, the proportion of the egg white protein having a molecular weight of not less than 97,400 and not more than 340,000 to the egg white protein having a molecular weight of not less than 20,100 and not more than 340,000 is favorably not less than 15%, more favorably not less than 20%, more favorably not less than 25%, and particularly favorably not less than 30%, because dried egg white having high gel strength can be prepared in a short continuously heating time period.

Note that the method of producing continuously heated raw material dried egg white used for the dried egg white of the present invention may be a conventional method. For example, a method of spray drying liquid egg white and continuously heating it can be used.

The continuously heating temperature at the time of producing continuously heated raw material dried egg white is favorably not less than 60°C and not more than 80°C, more favorably not less than 65°C and not more than 80°C, and particularly favorably not less than 70°C and not more than 80°C, because dried egg white having high gel strength can be prepared in a short continuously heating time period.

Further, the continuously heating time period at the time of producing continuously heated raw material dried egg white is not less than five days, because dried egg white having high gel strength can be stably prepared. Further, the upper limit of the continuously heating time period at the time of producing continuously heated raw material dried egg white is not particularly limited. However, the upper limit of the continuously heating time period at the time of producing continuously heated raw material dried egg white is not more than 60 days, favorably not more than 45 days, and particularly favorably not more than 30 days, because continuously heated raw material dried egg white is over-denatured and it becomes difficult to stably prepare dried egg white having high gel strength in the case where the continuously heating time period is long.

Further, the continuously heated raw material dried egg white used for the dried egg white of the present invention is favorably desalted, because dried egg white having high gel strength can be stably prepared.

### <Method of Producing Dried Egg White of Present Invention Using Continuously Heated Raw Material Dried Egg White>

The dried egg white of the present invention can be produced using the above-mentioned continuously heated raw material dried egg white. Specifically, the dried egg white can be produced by a continuously heating step of continuously heating, at not less than 80°C and not more than 100°C, continuously heated raw material dried egg white in which the proportion of the egg white protein having a molecular weight of not less than 97,400 and not more than 340,000 is less than 35% of the proportion of the egg white protein having a molecular weight of not less than 20,100 and not more than 340,000 so that the proportion of the egg white protein having a molecular weight of not less than 97,400 and not more than 340,000 is not less than 35% of the proportion of the egg white protein having a molecular weight of not less than 20,100 and not more than 340,000.

However, the continuously heating temperature at the time of the continuously heating step is favorably not less than 80°C and not more than 95°C, and particularly favorably not less than 80°C and not more than 90°C, because continuously heated raw material dried egg white is over-denatured and it becomes difficult to stably prepare dried egg white having high gel strength in the case where the continuously heating temperature at the time of the continuously heating step is high.

Further, the continuously heating temperature at the time of the continuously heating step is not less than 5°C, and favorably not less than 10°C higher than the above-mentioned continuously heating temperature at the time of producing continuously heated raw material dried egg white, because dried egg white having high gel strength can be prepared in a short continuously heating time period.

Further, the continuously heating time period at the time of the continuously heating step is favorably not less than five days, because dried egg white having high gel strength can be stably prepared. The upper limit of the continuously heating time period at the time of the continuously heating step is not particularly limited. However, the upper limit of the continuously heating time period at the time of the continuously heating step is not more than 60 days, favorably not more than 45 days, and particularly favorably not more than 30 days, because continuously heated raw material dried egg white is over-denatured and it becomes difficult to stably prepare dried egg white having high gel strength in the case where the continuously heating time period is long.

### <Method of Producing Dried Egg White of Present Invention Using Liquid Egg White>

Further, the dried egg white of the present invention can be produced by not only the above-mentioned method using continuously heated raw material dried egg white but also by using liquid egg white.

Specifically, the dried egg white of the present invention can be obtained by a method of producing dried egg white including: a drying step of drying liquid egg white; a first continuously heating step of performing, after the drying step, continuous heating so that the proportion of the egg white protein having a molecular weight of not less than 97,400 and not more than 340,000 is less than 35% of the proportion of the egg white protein having a molecular weight of not less than 20,100 and not more than 340,000; and a second continuously heating step of performing, after the first continuously heating step, continuous heating so that the proportion of the egg white protein having a molecular weight of not less than 97,400 and not more than 340,000 is not less than 35% of the proportion of the egg white protein having a molecular weight of not less than 20,100 and not more than 340,000.

### <Liquid Egg White Used as Raw Material of Dried Egg White of Present Invention>

The liquid egg white used as a raw material of the dried egg white of the present invention may be not only raw egg white obtained by egg breaking but also those obtained by soaking the raw egg white in water after performing any treatment such as sterilization treatment, concentration treatment, desugaring treatment, desalting treatment, enzyme treatment, and drying treatment. Among them, it is favorable to use the liquid egg white on which desugaring treatment has been performed, because reduction in quality such as occurrence of browning and unpleasant odor by a Maillard reaction due to a reaction with an amino group in the egg protein during heating treatment can be suppressed.

Further, it is favorable to use the liquid egg white on which desalting treatment has been performed, because dried egg white having high gel strength can be easily and stably obtained.

The method of desalting treatment is not particularly limited, and conventional methods such as an electrodialysis method, an ultrafiltration method, a reverse osmosis method, a method of using ion exchange resin, and a dialysis method using a semi-permeable membrane such as a cellulose membrane can be used. However, it is favorable to use an ultrafiltration method or a reverse osmosis method, because dried egg white having high gel strength can be easily and stably obtained. Particularly favorably, an ultrafiltration method may be used.

### <Drying Step>

The method of the drying step is not particularly limited. For example, it only needs to perform drying treatment on liquid egg white by various methods such as spray drying, pan drying, freeze drying, and vacuum drying according to a conventional method until the water content is approximately 4 to 12%.

The water content of the dried egg white can be measured by an infrared moisture meter (FD-600, Kett Electric Laboratory).

### <First Continuously Heating Step>

The first continuously heating step of the present invention is not particularly limited as long as liquid egg white is continuously heated after drying according to a conventional method so that the proportion of the egg white protein having a molecular weight of not less than 97,400 and not more than 340,000 is less than 35% of the proportion of the egg white protein having a molecular weight of not less than 20,100 and not more than 340,000.

In the case where the continuously heating condition in the first continuously heating step is outside the above-mentioned range, it is difficult to easily and stably obtain dried egg white having high gel strength.

Further, the continuously heating temperature at the time of the first continuously heating step is not less than 60 and not more than 80°C, mure favorably not less than 65°C and not more than 80°C, and more favorably not less than 65°C and not more than 75°C, because dried egg having high gel strength can be easily obtained after the later second continuously heating step.

Further, the continuously heating time period at the time of the first continuously heating step is favorably not less than five days, and more favorably not less than 10 days, because dried egg white having high gel strength can be stably prepared.

The upper limit of the continuously heating time period at the time of the continuously heating step is not particularly limited. However, the upper limit of the continuously heating time period at the time of the first continuously heating step is not more than 60 days, favorably not more than 45 days, and particularly favorably not more than 30 days, because the liquid egg white is over-denatured and it becomes difficult to stably prepare dried egg white having high gel strength after the later second continuously heating step in the case where the continuously heating time period is long.

### <Second Continuously Heating Step>

The second continuously heating step of the present invention is not particularly limited as long as continuous heating is performed according to a conventional method so that the proportion of the egg white protein having a molecular weight of not less than 97,400 and not more than 340,000 is not less than 35% of the proportion of the egg white protein having a molecular weight of not less than 20,100 and not more than 340,000.

In the case where the continuously heating condition in the second continuously heating step is outside the above-mentioned range, it is difficult to easily and stably obtain dried egg white having high gel strength.

Further, the continuously heating temperature at the time of the second continuously heating step is favorably not less than 5°C higher than the continuously heating temperature in the first continuously heating step, not less than 80 and not more than 100°C, favorably not less than 80°C and not more than 95°C, and more favorably not less than 80°C and not more than 90°C, because continuously heated raw material dried egg white is over-denatured and it becomes difficult to stably prepare dried egg white having high gel strength in the case where the continuously heating temperature at the time of the continuously heating step is high, and because dried egg having high gel strength can be easily obtained after the second continuously heating step.

Further, the continuously heating time period at the time of the second continuously heating step is favorably not less than five days and more favorably not less than 10 days, because dried egg white having high gel strength can be stably prepared.

The upper limit of the continuously heating time period at the time of the second continuously heating step is not particularly limited. However, the upper limit of the continuously heating time period at the time of the second continuously heating step is favorably not more than 60 days, more favorably not more than 45 days, and particularly favorably not more than 30 days, because dried egg white after the first continuously heating step is over-denatured in the case where the continuously heating time period is long and it becomes difficult to stably prepare dried egg white having high gel strength after the second continuously heating step.

### <Another Continuously Heating Step>

The dried egg white of the present invention can be further continuously heated in addition to the above-mentioned continuously heating step.

### <Desalting Step>

The desalting step is a step of removing inorganic salts that dissociate as ions in a solution of liquid egg white. Examples of the inorganic salts include cations such as a sodium ion and a calcium ion, and anions such as a chlorine ion.

The desalting step of the present invention is not particularly limited and may be performed according to a conventional method as long as it is performed before the drying step. For example, an electrodialysis method, an ultrafiltration method, a reverse osmosis method, a method of using ion exchange resin, and a dialysis method using a semi-permeable membrane such as a cellulose membrane can be used. Among them, it is favorable to use an ultrafiltration method or a reverse osmosis method, because dried egg white having high gel strength can be easily and stably obtained. Particularly favorably, an ultrafiltration method may be used.

### <Method of Producing Dried Egg White Having Adjusted Gel Strength>

By mixing the dried egg white of the present invention with dried egg white in which the proportion of the egg white protein having a molecular weight of not less than 97,400 and not more than 340,000 is less than 35% of the proportion of the egg white protein having a molecular weight of not less than 20,100 and not more than 340,000, it is possible to prepare dried egg white having adjusted gel strength of not less than 400 g and not more than 800 g, and the effect of the present invention can be easily achieved. Therefore, the gel strength of the dried egg white is favorably not less than 500 g and not more than 800 g, more favorably not less than 550 g and not more than 800 g, and particularly favorably not less than 600 g and not more than 800 g.

Further, dried egg white may be prepared by mixing the dried egg white of the present invention with commercially available dried egg white or the like.

### <Method of Measuring Proportion of Molecular Weight of Egg White Protein>

The proportion of an egg white protein of the present invention represents a value measured using SDS-polyacrylamide gel electrophoresis.

Here, the proportion of the egg white protein can be measured by the following method.

Ninety nine g of distilled water was added to 1 g of dried egg white, and dissolved with a stirrer to prepare an aqueous solution of 1%. The obtained sample was diluted by adding sample buffer for SDS (sodium dodecyl sulfate)-polyacrylamide gel electrophoresis, adjusted so that the protein concentration was 0.1 mg/mL, and then heated on a boiling water bath for five minutes to obtain a sample for electrophoresis.

The SDS-polyacrylamide gel electrophoresis is performed under the constant current condition of 20 mA using SDS-PAG mini of 4 to 20% (TEFCO), which is commercially available polyacrylamide gel, and a dedicated electrophoresis tank (STC-808, TEFCO).

Further, although the electrophoresis time may be appropriately adjusted, it is favorably 80 to 100 minutes, because the band can be easily determined.

Ten µL of each sample for electrophoresis is subjected to polyacrylamide gel.

Note that as a standard protein (molecular weight marker) for measuring the molecular weight, a molecular weight marker II (TEFCO) is used.

When bromophenol blue as a labelling dye in the sample buffer reaches approximately 5 mm from the lower end of the gel, the electrophoresis is terminated, and the gel is taken out of the electrophoresis tank, and dyed with a Coomassie Brilliant Blue G-250 solution for 30 minutes at room temperature. The gel is decolorized with a decolorizing solution (10% methanol, 7.5% acetic acid solution) until the background becomes transparent, and the band pattern of electrophoresis is detected.

Subsequently, the decolorized gel is imaged, the band pattern of electrophoresis is detected using a densitometer (hardware: ULTRA CAM (manufactured by Tokyo Instruments, Inc., software: Total Lab. Quant (manufactured by Total Lab.)), and the band is quantified.

The pixel intensity distribution of each band is integrated to obtain the peak area of the band. By using a digital gel imager, an image obtained by imaging the band of the gel with a digital camera is analyzed to convert the contrasting density of the band into numerical numbers. Accordingly, the pixel intensity with respect to the position (pixel position) of the band can be obtained.

The proportion of the egg white protein having a molecular weight of not less than 97,400 and not more than 340,000 to the egg white protein having a molecular weight of not less than 20,100 and not more than 340,000 is obtained.

Note that the molecular weight of 20,100 and the molecular weight of 97400 each represent a value of a molecular weight marker. In order to ensure the precision of the numerical value and eliminate the macromolecule egg white protein, the molecular weight exceeding 340,000 is not analyzed and the upper limit of the molecular weight for analysis of the egg white protein is 340,000 in this test.

Note that since the molecular weight of 340,000 was not in the value of the molecular weight marker, a point at which the molecular weight of 340,000 was achieved was calculated using a formula obtained by another molecular weight marker, and the obtained point was used.

As described above, the dried egg white processed so that the proportion of the egg white protein having a molecular weight of not less than 97,400 and not more than 340,000 is not less than 35% of the proportion of the egg white protein having a molecular weight of not less than 20,100 and not more than 340,000 is dried egg white having high gel strength.

Further, examples of the case where the proportion of the egg white protein having a molecular weight of not less than 97,400 and not more than 340,000 is less than 35% of the proportion of the egg white protein having a molecular weight of not less than 20,100 and not more than 340,000 include a case where the continuously heating step is performed one time, or the continuously heating condition is not within the above-mentioned range even if the continuously heating step is performed a plurality of times, and a case where the continuously heating temperature is high or the continuously heating time period is long, which causes the dried egg white to be over-denatured and agglomerated.

Hereinafter, the dried egg white of the present invention will be specifically described on the basis of Examples and Comparative Examples. Note that the present invention is not limited thereto.

### Example

### [Example 1]

### <Production of Dried Egg White>

A shell egg is mechanically broken, and the liquid egg white is separated, filtered, and homogenized according to a conventional method to obtain liquid egg white. After ultrafiltration of 4500 g of the obtained liquid egg white, 9 g of yeast for bread was added thereto, and desugaring treatment was performed for four hours at 35°C. After the desugaring treatment, hydrochloric acid was added thereto to adjust the pH after spray drying to seven.

Next, after drying by spray drying, the first continuously heating step was performed for 28 days at 74°C.

Further, the second continuously heating step was performed for 28 days at 84°C to prepare dried egg white according to Example 1.

Note that the proportion of the egg white protein having a molecular weight of not less than 97,400 and not more than 340,000 contained in the dried egg white after the first continuously heating step to the total egg white proteins was 31%.

Further, the proportion of the egg white protein having a molecular weight of not less than 97,400 and not more than 340,000 in Example 1 to the total egg white proteins was 55%.

### <Measurement of Gel Strength>

One part of the dried egg white of Example 1 was dissolved in seven parts of saline of 2% by mass, this was filled and sealed in a casing formed of polyethylene having a folding diameter of 60 mm, and coagulated by heating in hot water of 80°C for 40 minutes, the obtained coagulated egg white was cut into a cylindrical shape with a height of 3 cm after cooling, and then, the breaking stress (the gel strength) on the cut surface was measured at a product temperature of 20°C by a texture analyzer (spherical plunger with a diameter of 8 mm, plunger lowering speed of 1 mm/sec). The obtained gel strength was 807 g.

Further, when the breaking stress (the gel strength) of the dried egg white after the first continuously heating step was measured in the same way as that in Example 1, the obtained gel strength was 577 g.

### [Example 2]

Dried egg white according to Example 2 was prepared in the same way as that in Example 1 except that the number of days of the second continuously heating step was 21, citric acid was used, instead of hydrochloric acid, for adjusting pH after spray drying to seven, and ultrafiltration was not performed unlike Example 1.

Note that the proportion of the egg white protein having a molecular weight of not less than 97,400 and not more than 340,000 contained in the dried egg white after the first continuously heating step to the total egg white proteins was less than 35%.

Further, the proportion of the egg white protein having a molecular weight of not less than 97,400 and not more than 340,000 in Example 2 to the total egg white proteins was 43%.

When the breaking stress (the gel strength) of the dried egg white of Example 2 was measured in the same way as that in Example 1, the obtained gel strength was 687 g.

Further, when the breaking stress (the gel strength) of the dried egg white after the first continuously heating step was measured in the same way as that in Example 1, the obtained gel strength was 515 g.

### [Example 3]

Dried egg white according to Example 3 was prepared in the same way as that in Example 1 except that the number of days of the first continuously heating step was six and the number of days of the second continuously heating step was 21 unlike Example 1.

Note that the proportion of the egg white protein having a molecular weight of not less than 97,400 and not more than 340,000 contained in the dried egg white after the first continuously heating step to the total egg white protein was less than 35%.

Further, the proportion of the egg white protein having a molecular weight of not less than 97,400 and not more than 340,000 in Example 3 to the total egg white proteins was not less than 35%.

When the breaking stress (the gel strength) of the dried egg white of Example 4 was measured in the same way as that in Example 1, the obtained gel strength was 695 g.

Further, when the breaking stress (the gel strength) of the dried egg white after the first continuously heating step was measured in the same way as that in Example 1, the obtained gel strength was 232 g.

### [Example 4]

Commercially available dried egg white continuously heated for 21 days at 75°C as continuously heated raw material dried egg white was continuously heated for 14 days at 84°C to prepare dried egg white according to Example 4.

Note that in the continuously heated raw material dried egg white, the proportion of egg white protein having a molecular weight of not less than 97,400 and not more than 340,000 was 32% of the proportion of the egg white protein having a molecular weight of not less than 20,100 and not more than 340,000.

Further, in the dried egg white of Example 4, the proportion of the egg white protein having a molecular weight of not less than 97,400 and not more than 340,000 was 42% of the proportion of the egg white protein having a molecular weight of not less than 20,100 and not more than 340,000.

When the breaking stress (the gel strength) of the dried egg white of Example 4 was measured in the same way as that in Example 1, the obtained gel strength was 742 g.

Further, when the breaking stress (the gel strength) of the continuously heated raw material dried egg white was measured in the same way as that in Example 1, the obtained gel strength was 571 g.

### [Example 5]

Commercially available dried egg white used in Example 4 as continuously heated raw material dried egg white was continuously heated for seven days at 94°C to prepare dried egg white according to Example 5.

Note that in the continuously heated raw material dried egg white, the proportion of egg white protein having a molecular weight of not less than 97,400 and not more than 340,000 was 32% of the proportion of the egg white protein having a molecular weight of not less than 20,100 and not more than 340,000.

Further, in the dried egg white of Example 5, the proportion of the egg white protein having a molecular weight of not less than 97,400 and not more than 340,000 was not less than 35% of the proportion of the egg white protein having a molecular weight of not less than 20,100 and not more than 340,000.

When the breaking stress (the gel strength) of the dried egg white of Example 5 was measured in the same way as that in Example 1, the obtained gel strength was 747 g.

Further, when the breaking stress (the gel strength) of the continuously heated raw material dried egg white was measured in the same way as that in Example 1, the obtained gel strength was 571 g.

### [Example 6]

Commercially available dried egg white continuously heated for 14 days at 66°C as continuously heated raw material dried egg white was continuously heated for seven days at 84°C to prepare dried egg white according to Example 6.

Note that in the continuously heated raw material dried egg white, the proportion of egg white protein having a molecular weight of not less than 97,400 and not more than 340,000 was less than 35% of the proportion of the egg white protein having a molecular weight of not less than 20,100 and not more than 340,000.

Further, in the dried egg white of Example 6, the proportion of the egg white protein having a molecular weight of not less than 97,400 and not more than 340,000 was not less than 35% of the proportion of the egg white protein having a molecular weight of not less than 20,100 and not more than 340,000.

When the breaking stress (the gel strength) of the dried egg white of Example 6 was measured in the same way as that in Example 1, the obtained gel strength was 651 g.

Further, when the breaking stress (the gel strength) of the continuously heated raw material dried egg white was measured in the same way as that in Example 1, the obtained gel strength was 559 g.

### [Example 7]

Commercially available dried egg white continuously heated for eight days at 63°C as continuously heated raw material dried egg white was continuously heated for 28 days at 84°C to prepare dried egg white according to Example 7.

Note that in the continuously heated raw material dried egg white, the proportion of egg white protein having a molecular weight of not less than 97,400 and not more than 340,000 was 20% of the proportion of the egg white protein having a molecular weight of not less than 20,100 and not more than 340,000.

Further, in the dried egg white of Example 7, the proportion of the egg white protein having a molecular weight of not less than 97,400 and not more than 340,000 was 38% of the proportion of the egg white protein having a molecular weight of not less than 20,100 and not more than 340,000.

When the breaking stress (the gel strength) of the dried egg white of Example 7 was measured in the same way as that in Example 1, the obtained gel strength was 627 g.

Further, when the breaking stress (the gel strength) of the continuously heated raw material dried egg white was measured in the same way as that in Example 1, the obtained gel strength was 401 g.

### [Comparative Example 1]

Dried egg white according to Comparative Example 1 was prepared in the same way as that in Example 7 except that the continuously heated raw material dried egg white was continuously heated for 21 days at 94°C unlike Example 7.

Note that in the continuously heated raw material dried egg white, the proportion of the egg white protein having a molecular weight of not less than 97,400 and not more than 340,000 was 20% of the proportion of the egg white protein having a molecular weight of not less than 20,100 and not more than 340,000.

Further, in the dried egg white of Comparative Example 1, the proportion of the egg white protein having a molecular weight of not less than 97,400 and not more than 340,000 was less than 35% of the proportion of the egg white protein having a molecular weight of not less than 20,100 and not more than 340,000.

When the breaking stress (the gel strength) of the dried egg white of Example 7 was measured in the same way as that in Example 1, the gel strength could not be measured, because the dried egg white was over-denatured, which generated insoluble matters when the dried egg white was dissolved in water.

### [Comparative Example 2]

Commercially available dried egg white continuously heated for 14 days at 82°C as continuously heated raw material dried egg white was continuously heated for 21 days at 84°C to prepare dried egg white according to Comparative Example 2.

Note that in the continuously heated raw material dried egg white, the proportion of egg white protein having a molecular weight of not less than 97,400 and not more than 340,000 was less than 35% of the proportion of the egg white protein having a molecular weight of not less than 20,100 and not more than 340,000.

Further, in the dried egg white of Comparative Example 2, the proportion of the egg white protein having a molecular weight of not less than 97,400 and not more than 340,000 was less than 35% of the proportion of the egg white protein having a molecular weight of not less than 20,100 and not more than 340,000.

When the breaking stress (the gel strength) of the dried egg white of Comparative Example 2 was measured in the same way as that in Example 1, the obtained gel strength was 594 g.

### [Example 8]

The dried egg white of Example 6 and the commercially available dried egg white used in Example 7 were mixed in equal amounts to prepare dried egg white according to Example 8.

When the breaking stress (the gel strength) of the dried egg white of Example 8 was measured in the same way as that in Example 1, the obtained gel strength was 508 g.

### [Example 9]

The dried egg white of Example 3 and the commercially available dried egg white used in Example 7 were mixed in equal amounts to prepare dried egg white according to Example 9.

When the breaking stress (the gel strength) of the dried egg white of Example 9 was measured in the same way as that in Example 1, the obtained gel strength was 560 g.

### [Example 10]

The dried egg white of Example 6 and commercially available dried egg white different from the commercially available dried egg white used in Example 7 were mixed in equal amounts to prepare dried egg white according to Example 10.

Note that in the commercially available dried egg white, the proportion of the egg white protein having a molecular weight of not less than 97,400 and not more than 340,000 was 31% of the proportion of the egg white protein having a molecular weight of not less than 20,100 and not more than 340,000.

When the breaking stress (the gel strength) of the dried egg white of Example 10 was measured in the same way as that in Example 1, the obtained gel strength was 606 g.

Further, when the breaking stress (the gel strength) of the continuously heated raw material dried egg white was measured in the same way as that in Example 1, the obtained gel strength was 573 g.

### [Example 11]

The dried egg white of Example 2 and the dried egg white of Example 4 were mixed in equal amounts to prepare dried egg white according to Example 11.

When the breaking stress (the gel strength) of the dried egg white of Example 11 was measured in the same way as that in Example 1, the obtained gel strength was 712 g.

## Claims

1. Dried egg white, comprising
an egg white protein having a molecular weight of not less than 97,400 and not more than 340,000,
wherein the proportion of the egg white protein, as measured using SDS-polyacrylamide gel electrophoresis, is at least 35% and not more than 80% of a proportion of an egg white protein having a molecular weight of not less than 20,100 and not more than 340,000.

2. The dried egg white according to claim 1, wherein
a gel strength of the dried egg white is not less than 625 g, the gel strength being measured by a following measuring method of:
dissolving one part of dried egg white in 7 parts of saline of 2% by mass; filling and sealing this in a casing formed of polyethylene having a folding diameter of 60 mm; coagulating it by heating in hot water of 80°C for 40 minutes; cutting the obtained coagulated egg white into a cylindrical shape with a height of 3 cm after cooling; and then, measuring a breaking stress (gel strength) on a cut surface is measured at a product temperature of 20°C by a texture analyzer (spherical plunger with a diameter of 8 mm, plunger lowering speed of 1 mm/sec).

3. The dried egg white according to claim 1 or 2, wherein
the dried egg white is desalted dried egg white.

4. A method of producing dried egg white, comprising
(1) preparing continuously heated raw material dried egg white in which a proportion of an egg white protein having a molecular weight of not less than 97,400 and not more than 340,000 is less than 35% of a proportion of an egg white protein having a molecular weight of not less than 20,100 and not more than 340,000; and
(2) continuously heating the continuously heated raw material dried egg white, at not less than 80°C and not more than 100°C, for not less than five days and not more than 60 days so that the proportion of the egg white protein having a molecular weight of not less than 97,400 and not more than 340,000 is not less than 35% of the proportion of the egg white protein having a molecular weight of not less than 20,100 and not more than 340,000.

5. The method of producing dried egg white according to claim 4, wherein
the continuously heated raw material dried egg white of step (1) is continuously heated raw material dried egg white continuously heated at not less than 60°C and not more than 80°C, and
the continuously heating step (2) is performed at a temperature not less than 5°C higher than a continuously heating temperature of the continuously heated raw material dried egg white.

6. The method of producing dried egg white according to claim 4 or 5, wherein
the continuously heated raw material dried egg white of step (1) is continuously heated raw material dried egg white continuously heated for not less than five days and not more than 60 days.

7. The method of producing dried egg white according to any one of claims 4 to 6, wherein
the continuously heated raw material dried egg white is desalted continuously heated raw material dried egg white.

8. A method of producing dried egg white, comprising:
a drying step of drying liquid egg white;
a first continuously heating step of performing, after the drying step, continuous heating at not less than 60°C and not more than 80°C, for not less than five days and not more than 60 days, so that a proportion of an egg white protein having a molecular weight of not less than 97,400 and not more than 340,000 is less than 35% of a proportion of an egg white protein having a molecular weight of not less than 20,100 and not more than 340,000; and
a second continuously heating step of performing, after the first continuously heating step, continuous heating at not less than 80°C and not more than 100°C, for not less than five days and not more than 60 days, so that the proportion of the egg white protein having a molecular weight of not less than 97,400 and not more than 340,000 is not less than 35% of the proportion of the egg white protein having a molecular weight of not less than 20,100 and not more than 340,000.

9. The method of producing dried egg white according to claim 8, wherein a continuously heating temperature of the second continuously heating step is not less than 5°C higher than a continuously heating temperature of the first continuously heating step.

10. The method of producing dried egg white according to claim 8 or 9, further comprising
a desalting step of desalting the liquid egg white before the drying step.

## Patentansprüche

1. Getrocknetes Eiweiß, umfassend
ein Eiweißprotein mit einem Molekulargewicht von nicht weniger als 97.400 und nicht mehr als 340.000,
wobei der Anteil des Eiweißproteins, gemessen unter Verwendung von SDS-Polyacrylamid-Gelelektrophorese, mindestens 35 % und nicht mehr als 80 % eines Anteils eines Eiweißproteins mit einem Molekulargewicht von nicht weniger als 20.100 und nicht mehr als 340.000 beträgt.

2. Getrocknetes Eiweiß nach Anspruch 1, wobei
eine Gelfestigkeit des getrockneten Eiweißes nicht weniger als 625 g beträgt, wobei die Gelstärke durch ein folgendes Messverfahren aus Folgendem gemessen wird:
Lösen von einem Teilgetrocknetem Eiweiß in 7 Teilen Kochsalzlösung von 2 Masse-%; Füllen und Abdichten dessen in einem Gehäuse, gebildet aus Polyethylen, mit einem faltenden Durchmesser von 60 mm; Koagulieren dessen durch Erhitzen in heißem Wasser mit 80 °C für 40 Minuten; Schneiden des erhaltenen koagulierten Eiweißes in eine zylindrische Form mit einer Höhe von 3 cm nach dem Abkühlen; und dann Messen einer Bruchspannung (Gelfestigkeit) auf einer Schnittfläche wird bei einer Produkttemperatur von 20 °C durch Textur-Analysator (kugelförmiger Kolben mit einem Durchmesser von 8 mm, Kolbenabsenkgeschwindigkeit von 1 mm/sek) gemessen.

3. Getrocknetes Eiweiß nach Anspruch 1 oder 2, wobei
das getrocknete Eiweiß entsalztes getrocknetes Eiweiß ist.

4. Verfahren des Herstellens von getrocknetem Eiweiß, umfassend
(1) Herstellen von kontinuierlich erhitztem getrocknetem Eiweiß als Ausgangsmaterial, in dem ein Anteil eines Eiweißproteins mit einem Molekulargewicht von nicht weniger als 97.400 und nicht mehr als 340.000 weniger als 35 % eines Anteils eines Eiweißproteins mit einem Molekulargewicht von nicht weniger als 20.100 und nicht mehr als 340.000 beträgt; und
(2) kontinuierliches Erhitzen des kontinuierlich erhitzten getrockneten Eiweißes als Ausgangsmaterial bei nicht weniger als 80 °C und nicht mehr als 100 °C für nicht weniger als fünf Tage und nicht mehr als 60 Tage, sodass der Anteil des Eiweißproteins mit einem Molekulargewicht von nicht weniger als 97.400 und nicht mehr als 340.000 nicht weniger als 35 % des Anteils des Eiweißproteins mit einem Molekulargewicht von nicht weniger als 20.100 und nicht mehr als 340.000 beträgt.

5. Verfahren des Herstellens von getrocknetem Eiweiß nach Anspruch 4, wobei
das kontinuierlich erhitzte getrocknete Eiweiß als Ausgangsmaterial aus Schritt (1) kontinuierlich erhitztes getrocknetes Eiweiß als Ausgangsmaterial ist, das bei nicht weniger als 60 °C und nicht mehr als 80 °C erhitzt wird, und
der Schritt des kontinuierlichen Erhitzens (2) bei einer Temperatur von nicht weniger als 5 °C höher als eine kontinuierliche Erhitzungstemperatur des kontinuierlich erhitzten getrockneten Eiweißes als Ausgangsmaterial ist.

6. Verfahren des Herstellens von getrocknetem Eiweiß nach Anspruch 4 oder 5, wobei
das kontinuierlich erhitzte getrocknete Eiweiß als Ausgangsmaterial aus Schritt (1) kontinuierlich erhitztes getrocknetes Eiweiß als Ausgangsmaterial ist, das für nicht weniger als fünf Tage und nicht mehr als 60 Tage erhitzt wird.

7. Verfahren des Herstellens von getrocknetem Eiweiß nach Anspruch 4 bis 6, wobei
das kontinuierlich erhitzte getrocknete Eiweiß als Ausgangsmaterial entsalztes kontinuierlich erhitztes getrocknetes Eiweiß als Ausgangsmaterial ist.

8. Verfahren des Herstellens von getrocknetem Eiweiß, umfassend:
einen Trocknungsschritt des Trocknens von flüssigem Eiweiß;
einen ersten Schritt des kontinuierlichen Erhitzens des Durchführens, nach dem Trocknungsschritt, von kontinuierlichem Erhitzen bei nicht weniger als 60 °C und nicht mehr als 80 °C für nicht weniger als fünf Tage und nicht mehr als 60 Tage, sodass ein Anteil eines Eiweißproteins mit einem Molekulargewicht von nicht weniger als 97.400 und nicht mehr als 340.000 weniger als 35 % eines Anteils eines Eiweißproteins mit einem Molekulargewicht von nicht weniger als 20.100 und nicht mehr als 340.000 beträgt; und
einen zweiten Schritt des kontinuierlichen Erhitzens des Durchführens, nach dem ersten Schritt des kontinuierlichen Erhitzens, von kontinuierlichem Erhitzen bei nicht weniger als 80 °C und nicht mehr als 100 °C für nicht weniger als fünf Tage und nicht mehr als 60 Tage, sodass der Anteil des Eiweißproteins mit einem Molekulargewicht von nicht weniger als 97.400 und nicht mehr als 340.000 weniger als 35 % des Anteils des Eiweißproteins mit einem Molekulargewicht von nicht weniger als 20.100 und nicht mehr als 340.000 beträgt.

9. Verfahren des Herstellens von getrocknetem Eiweiß nach Anspruch 8, wobei eine kontinuierliche Erhitzungstemperatur des zweiten Schritts des kontinuierlichen Erhitzens nicht weniger als 5 °C höher als eine kontinuierliche Erhitzungstemperatur des ersten Schritts des kontinuierlichen Erhitzens ist.

10. Verfahren des Herstellens von getrocknetem Eiweiß nach Anspruch 8 oder 9, ferner umfassend
einen Entsalzungsschritt des Entsalzens des flüssigen Eiweißes vor dem Trocknungsschritt.

## Revendications

1. Blanc d'oeuf séché, comprenant
une protéine de blanc d'oeuf ayant un poids moléculaire d'au moins 97 400 et d'au plus 340 000,
dans lequel la proportion de protéine de blanc d'oeuf, telle que mesurée par électrophorèse sur gel de SDS-polyacrylamide, est d'au moins 35 % et d'au plus 80 % d'une proportion d'une protéine de blanc d'oeuf ayant un poids moléculaire d'au moins 20 100 et d'au plus 340 000.

2. Blanc d'oeuf séché selon la revendication 1, dans lequel
la force du gel du blanc d'oeuf séché n'est pas inférieure à 625 g, la force du gel étant mesurée par un procédé de mesure consistant à :
dissoudre une partie de blanc d'oeuf séché dans 7 parties de solution saline à 2% en masse ; remplir et sceller celle-ci dans une enveloppe formée de polyéthylène ayant un diamètre de pliage de 60 mm ; coaguler en chauffant celle-ci dans de l'eau chaude à 80°C pendant 40 minutes ; découper le blanc d'oeuf coagulé obtenu en une forme cylindrique d'une hauteur de 3 cm après refroidissement ; puis, mesurer une contrainte à la rupture (résistance du gel) sur une surface coupée est mesurée à une température de produit de 20°C par un analyseur de texture (piston sphérique d'un diamètre de 8 mm, vitesse d'abaissement du piston de 1 mm/sec).

3. Blanc d'oeuf séché selon la revendication 1 ou 2, dans lequel
le blanc d'oeuf séché est du blanc d'oeuf séché dessalé.

4. Procédé de production de blanc d'oeuf séché, comprenant
(1) la préparation de blanc d'oeuf séché chauffé en continu dans lequel une proportion d'une protéine de blanc d'oeuf ayant un poids moléculaire d'au moins 97 400 et d'au plus 340 000 est inférieure à 35 % d'une proportion d'une protéine de blanc d'oeuf ayant un poids moléculaire d'au moins 20 100 et d'au plus 340 000 ; et
(2) le chauffage du blanc d'oeuf séché de matière première en continu, à au moins 80 °C et au plus 100 °C, pendant au moins cinq jours et au plus 60 jours de sorte que la proportion de protéine de blanc d'oeuf ayant un poids moléculaire d'au moins 97 400 et d'au plus 340 000 ne représente pas moins de 35 % de la proportion de protéine de blanc d'oeuf ayant un poids moléculaire d'au moins 20 100 et d'au plus 340 000.

5. Procédé de production de blanc d'oeuf séché selon la revendication 4, dans lequel le blanc d'oeuf séché de matière première chauffée en continu de l'étape (1) est du blanc d'oeuf séché de matière première chauffée en continu à au moins 60°C et au plus 80°C, et l'étape de chauffage en continu (2) est réalisée à une température d'au moins 5 °C supérieure à une température de chauffage en continu du blanc d'oeuf séché de matière première chauffée en continu.

6. Procédé de production de blanc d'oeuf séché selon la revendication 4 ou 5, dans lequel le blanc d'oeuf séché de matière première chauffée en continu de l'étape (1) est du blanc d'oeuf séché de matière première chauffée en continu pendant au moins cinq jours et au plus 60 jours.

7. Procédé de production de blanc d'oeuf séché selon l'une quelconque des revendications 4 à 6, dans lequel
le blanc d'oeuf séché de matière première chauffée en continu est du blanc d'oeuf séché de matière première chauffée en continu dessalé.

8. Procédé de production de blanc d'oeuf séché, comprenant :
une étape de séchage consistant à sécher le blanc d'oeuf liquide ;
une première étape de chauffage continu consistant à effectuer, après l'étape de séchage, un chauffage continu à au moins 60 °C et au plus 80 °C, pendant au moins cinq jours et au plus 60 jours, de sorte qu'une proportion d'une protéine de blanc d'oeuf ayant un poids moléculaire d'au moins 97 400 et d'au plus 340 000 représente moins de 35 % d'une proportion d'une protéine de blanc d'oeuf ayant un poids moléculaire d'au moins 20 100 et d'au plus 340 000 ; et
une seconde étape de chauffage continu consistant à effectuer, après la première étape de chauffage continu, un chauffage continu à au moins 80°C et au plus 100°C, pendant au moins cinq jours et au plus 60 jours, de sorte que la proportion de protéine de blanc d'oeuf ayant un poids moléculaire d'au moins 97 400 et d'au plus 340 000 n'est pas inférieure à 35 % de la proportion de protéine de blanc d'oeuf ayant un poids moléculaire d'au moins 20 100 et d'au plus 340 000.

9. Procédé de production de blanc d'oeuf séché selon la revendication 8, dans lequel une température de chauffage continu de la seconde étape de chauffage continu n'est pas inférieure de 5 °C supérieure à une température de chauffage continu de la première étape de chauffage continu.

10. Procédé de production de blanc d'oeuf séché selon la revendication 8 ou 9, comprenant en outre une étape de dessalage consistant à dessaler le blanc d'oeuf liquide avant l'étape de séchage.
